# FASCICULE DE BREVET EUROPEEN

(11) **EP 0 733 522 B1**
(45) Date de publication et mention de la délivrance du brevet: **18.07.2001**
(21) Numéro de dépôt: 96400554.0
(22) Date de dépôt: 18.03.1996
(51) Int. Cl.: B60R 25/04

(54) **Antivol électrique de véhicule automobile**
Elektrische Diebstahlsicherung für ein Kraftfahrzeug
Electric anti-theft device for a motor vehicle

(30) Priorité: 21.03.1995 FR 9503393
(43) Date de publication de la demande: 25.09.1996
(73) Titulaire: VALEO SECURITE HABITACLE, 94000 Créteil (FR)
(72) Inventeur: Peyre, Jean, 78800 Houilles (FR); Humbert, Arnaud, 94000 Créteil (FR); Demouy, Olivier, 75012 Paris (FR)
(74) Mandataire: Kohn, Philippe

(56) Documents cités:
- FR-A- 2 454 503
- US-A- 3 735 833
- ATZ AUTOMOBILTECHNISCHE ZEITSCHRIFT, vol. 96, no. 5, STUTTGART DE, pages 321-323,330, XP000442154 CHRISTIAN SCHNEIDER; ULRISCH SCHREY: "Ein Fahrzeugsystem ohne mechanischen Schlüssel"

## Description

La présente invention concerne un antivol électrique, notamment pour un véhicule automobile.

Il a déjà été proposé des dispositifs permettant de déverrouiller à distance, et donc sans contact, ni électrique, ni mécanique, les ouvrants d'un objet et notamment d'un véhicule automobile.

En particulier on a développé des techniques d'accès sans clef qui permettent d'accéder à des ressources sans avoir à sortir une clef mécanique, ou un moyen équivalent, d'autorisation de l'accès.

Un tel système est très attractif par le confort qu'il apporte à l'usager et par les possibilités de gestion des accès par des moyens informatiques qu'il permet.

Dans l'application au verrouillage et au déverrouillage d'ouvrants comme ceux d'un véhicule automobile, ou d'un antivol de sécurité comme celui d'une colonne de direction, ou de l'arbre de sortie de la boîte de vitesses d'un véhicule, on a dans cette optique proposé des systèmes mécaniques utilisant des organes moteurs de type électrique, tels qu'un moteur électrique tournant ou un électro-aimant.

Quand le système de gestion des accès reconnaît le droit d'accès et une demande d'accès, un organe de commande produit un ordre d'actionnement qui excite l'organe moteur électrique. L'antivol et/ou le verrou change d'état en passant de l'état verrouillé à l'état déverrouillé.

Une séquence analogue inverse se produit pour la sortie et/ou l'activation de l'antivol.

Selon une conception connue, décrite et représentée dans le document FR-A-2.710.599 (non publié à la date de priorité du présent brevet), il a déjà été proposé un procédé de contrôle d'un antivol de véhicule, notamment avec système d'accès par commande à distance, faisant notamment appel à un commutateur de commande de démarrage et d'alimentation électrique des accessoires du véhicule. Un autre état de la technique est constitué par le document US-A-3.735.833.

Selon le procédé, dans une phase de désactivation de l'antivol, on accède au véhicule, par exemple avec une télécommande, on manoeuvre un commutateur qui reproduit la manipulation des clefs mécaniques habituelles, on détecte une position déterminée du commutateur pour produire une interrogation d'identification de la demande de déverrouillage de l'antivol, et on produit en réponse un ordre d'activation de positions successives du commutateur et un ordre de déverrouillage de l'antivol.

Dans une phase de verrouillage de l'antivol, on détecte une manoeuvre de verrouillage de l'antivol sur le commutateur, cette manoeuvre reproduisant les manipulations habituelles des clefs mécaniques, on active l'antivol, on désactive les positions successives du commutateur.

Pour la mise en oeuvre d'un tel procédé, il est fait appel à un antivol électrique du type comportant :
- un commutateur d'antivol pour la commande du démarrage du moteur du véhicule et de l'alimentation de différents circuits électriques du véhicule ;
- un antivol motorisé comportant un moteur électrique d'entraînement d'un organe de blocage entre une position verrouillée et une position déverrouillée ;
- et du type dans lequel le commutateur d'antivol comporte :
- un interrupteur de clef pour détecter la simulation de l'introduction dans le commutateur d'antivol ; et
- un interrupteur de commande à positions multiples pour commander en séquence l'alimentation de plusieurs circuits électriques du véhicule et du démarreur, comportant un contact mobile de commande relié à une polarité d'une source d'alimentation électrique, et une série de contacts fixes avec lesquels le contact mobile de commande entre successivement en contact lors de la manoeuvre du commutateur en vue de provoquer le démarrage du véhicule, et parmi lesquels le dernier contact fixe est relié notamment au démarreur, l'interrupteur de commande ne pouvant être actionné qu'en présence d'une clef.
   Ce document propose également d'utiliser une centrale d'antivol connectée aux éléments précédents pour mettre en oeuvre un procédé de contrôle de l'antivol.
   La conception de l'antivol décrite dans ce document est adaptée à un antivol motorisé dont le moteur électrique est un moteur dont on commande la mise en marche et l'inversion du sens de rotation de son arbre de sortie, par inversion des polarités à ses bornes d'alimentation, selon que l'on veut provoquer le verrouillage ou le déverrouillage de l'antivol.
   La présente invention a pour but de proposer une nouvelle conception d'un antivol électrique du type mentionné précédemment qui présente les mêmes caractéristiques de fiabilité, qu'il soit fait appel ou non à une centrale d'antivol, mais qui soit adaptée à l'utilisation d'un moteur électrique d'antivol à sens constant de rotation.
   Dans ce but, l'invention propose un antivol électrique du type mentionné précédemment, caractérisé en ce que moteur électrique d'antivol motorisé comporte une première borne d'alimentation qui est reliée à une première polarité de la source d'alimentation, et une seconde borne d'alimentation qui n'est reliée à la seconde polarité de la source d'alimentation, à travers des moyens de détection de l'état de l'antivol et à travers l'interrupteur de clef,
- qu'en l'absence de clef et lorsque l'antivol n'est pas en position verrouillée,
- ou qu'en présence de clef et lorsque l'antivol n'est pas en position déverrouillée.

Selon d'autres caractéristiques de l'invention :
- l'interrupteur de clef comporte un contact mobile relié à la seconde polarité de la source d'alimentation et qui est susceptible de coopérer avec un premier contact fixe des moyens de détection de l'état de l'antivol, en l'absence de clef, et avec un second contacts fixes des moyens de détection de l'état de l'antivol, en présence de clef, et les moyens de détection de l'état de l'antivol comportent un contact mobile qui est relié en permanence à la seconde borne d'alimentation du moteur et qui n'est susceptible de coopérer avec le premier contact fixe lorsque l'antivol est en position déverrouillée ou lorsque l'organe de blocage est dans sa phase de transition de l'état déverrouillé vers l'état verrouillé, ou avec le second contact fixe lorsque l'antivol est en position verrouillée ou lorsque l'organe de blocage est dans sa phase de transition de l'état verrouillé vers l'état déverrouillé ;
- l'antivol comporte une centrale d'antivol connectée au commutateur d'antivol et à l'antivol motorisé, le moteur d'entraînement est relié électriquement à la source d'alimentation par un bloc d'alimentation qui reçoit des signaux de commande du verrouillage ou du déverrouillage de l'antivol provenant de la centrale d'antivol, ladite première borne d'alimentation du moteur est une première borne d'alimentation du bloc d'alimentation et ladite seconde borne d'alimentation du moteur est une seconde borne d'alimentation du bloc d'alimentation ;
- la seconde borne d'alimentation est reliée en permanence à une entrée, de la centrale d'antivol, de détection d'un changement d'état de la seconde borne d'alimentation ;
- une entrée de la centrale d'antivol reçoit un signal de détection d'un changement d'état de l'interrupteur de clef ;
- ladite entrée de détection d'un changement d'état de l'interrupteur de clef est reliée en permanence à l'un des deux contacts fixes des moyens de détection de l'état de l'antivol ;
- l'un au moins des contacts fixes de l'interrupteur de commande à positions multiples du commutateur d'antivol est relié au circuit électrique associé du véhicule par un dispositif d'inhibition qui n'établit l'alimentation électrique de ce circuit que lorsque l'antivol est en position déverrouillée ;
- le dispositif d'inhibition est un interrupteur d'inhibition dont le contact mobile est relié audit contact fixe de l'interrupteur de commande et coopère avec un plot fixe relié audit circuit électrique du véhicule lorsque l'antivol est en position déverrouillée ;
- le contact mobile de l'interrupteur d'inhibition est lié en rotation au moteur de l'antivol motorisé ;
- le commutateur d'antivol est un commutateur rotatif.

D'autres caractéristiques et avantages de l'invention apparaîtront à la lecture de la description détaillée qui va suivre pour la compréhension de laquelle on se reportera aux dessins annexés dans lesquels :
- La figure 1 est un schéma illustrant un principe de réalisation d'un antivol selon l'état de la technique comportant notamment une centrale électronique d'antivol ;
- la figure 2 est un schéma qui illustre un premier mode de réalisation d'un antivol électrique selon l'invention, comportant une centrale d'antivol, sur lequel l'antivol électrique est représenté à l'état verrouillé et en l'absence de clef ;
- la figure 3 est un schéma similaire à celui de la figure 2 sur lequel l'antivol électrique est illustré à l'état verrouillé et en présence de clef ;
- la figure 4 est un schéma similaire à celui de la figure 3 sur lequel l'antivol électrique est illustré dans une phase de transition lorsqu'il passe de l'état verrouillé à l'état déverrouillé ;
- la figure 5 est un schéma similaire à celui de la figure 4 sur lequel l'antivol électrique est représenté à l'état déverrouillé ;
- la figure 6 est un schéma similaire à celui de la figure 5 sur lequel l'antivol électrique est illustré à l'état déverrouillé après retrait de la clef ;
- la figure 7 est un schéma similaire à celui de la figure 6 sur lequel l'antivol électrique est illustré dans une phase de transition lorsqu'il passe de l'état déverrouillé à l'état verrouillé ;
- les figures 8 à 13 sont des schémas similaires à ceux des figures 2 à 7 qui illustrent un second mode de réalisation d'un antivol électrique conforme aux enseignements de l'invention qui ne comporte pas de centrale électronique d'antivol et dont la logique de commande est une logique câblée et protégée.

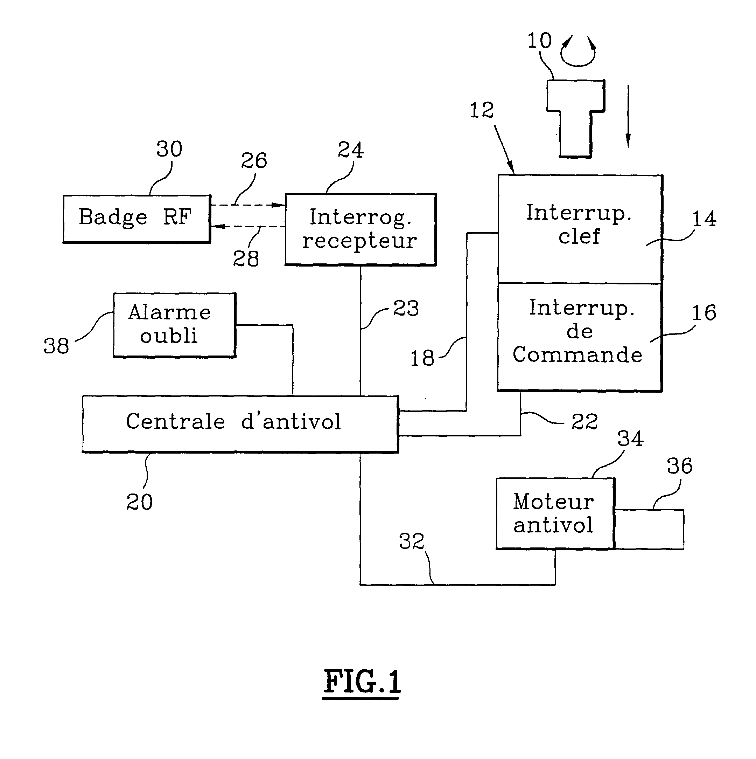

L'antivol électrique schématisé à la figure 1 comporte, conformément aux enseignements de l'état de la technique, une clef 10, ou une fausse clef, qui est destinée à venir s'introduire dans le canon, ou faux canon, d'un commutateur d'antivol 12. Le commutateur 12 est prévu pour équiper le tableau de bord du véhicule et sa conception est de type sensiblement proche de celle du commutateur de démarrage du véhicule selon l'état de la technique.

L'utilisateur manoeuvre la clef de contact 10 ou un anneau d'allumage.

La clef de contact 10 est en fait une fausse clef en ce qu'elle n'agit pas nécessairement sur une serrure mécanique, bien qu'une telle clef réelle apporte un degré supplémentaire de sécurité en ajoutant un moyen de verrouillage ou de déverrouillage supplémentaire en chaîne avec la conception générale d'un antivol électrique.

Le commutateur d'antivol 12 comporte un interrupteur de clef 14 qui est destiné à détecter l'absence de la clef 10 ou la présence en position introduite de cette dernière.

Le commutateur 12 comporte également un interrupteur de commande à positions multiples 16 pour la commande du démarrage du moteur du véhicule et pour la commande de l'alimentation de différents circuits électriques du véhicule.

L'interrupteur de clef 14 est relié par une ligne 18 à une entrée d'une centrale d'antivol 20 tandis que l'interrupteur de commande 16 est relié à une ligne 22 par une autre entrée de la centrale d'antivol 20.

La centrale d'antivol comporte un circuit d'analyse qui est notamment capable de lire les positions qu'occupent les interrupteurs 14 et 16 du commutateur 12.

La centrale d'antivol comporte par exemple un microcontrôleur tel qu'un circuit INTEL 8051. Ce circuit contient un programme de lecture des ports d'entrée pour informer la centrale d'antivol des positions des différents interrupteurs du commutateur 12 comme cela sera expliqué par la suite.

Selon une conception connue, et par une autre entrée et une ligne 23, la centrale d'antivol 20 peut échanger des signaux avec une station d'interrogation et de réception 24 qui échange par des lignes 26 et 28 des signaux avec, par exemple, un badge 30 d'accès sans clef au véhicule.

En fonction des échanges avec la centrale d'antivol 20, celle-ci produit sur une liaison 32 un signal de commande de la mise en marche d'un moteur d'antivol 34 qui agit sur un organe 36 de blocage mécanique de la colonne de direction du véhicule, ou de l'arbre de sortie de la boîte de vitesses.

Par ailleurs, si l'utilisateur oublie le badge radiofréquence 30 à l'intérieur du véhicule ou s'il omet de manoeuvrer la clef 10 pour mettre en oeuvre une séquence de verrouillage de l'antivol alors qu'il laisse son badge 30 dans le véhicule, la centrale d'antivol 20 produit le verrouillage d'un moyen d'alarme d'oubli 38.

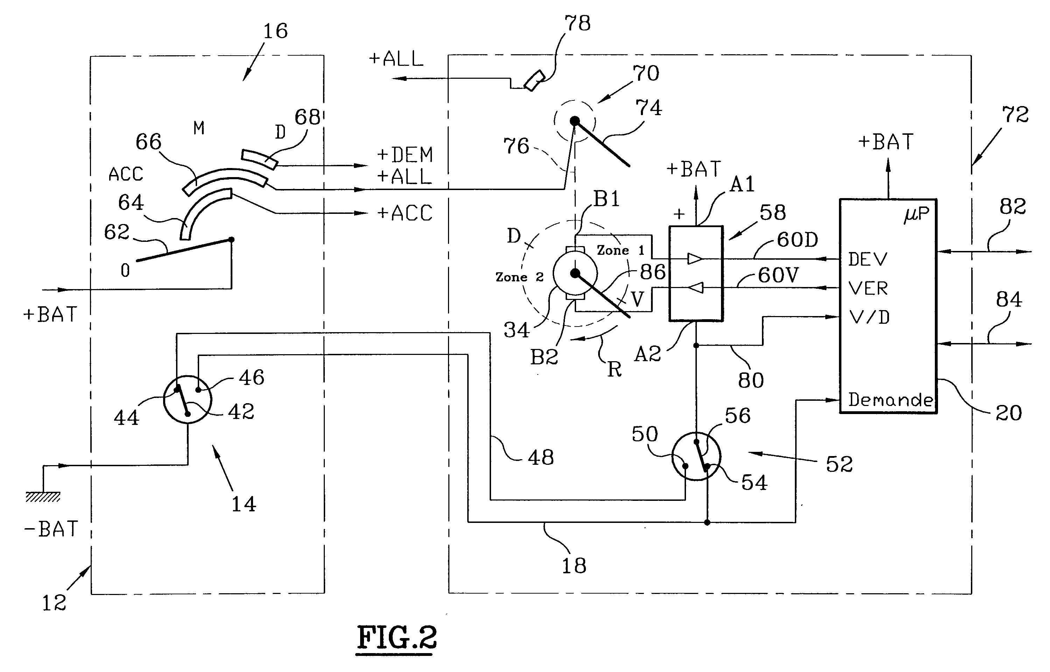

On décrira maintenant un premier mode de réalisation d'un antivol électrique selon l'invention en se reportant au schéma de la figure 2 sur laquelle des composants identiques ou similaires à ceux de la figure 1 sont désignés par les mêmes chiffres de référence.

L'interrupteur de clef 14 comporte un contact mobile basculant 42 qui est relié en permanence à la borne -BAT de la batterie du véhicule et dont l'extrémité libre coopère avec un contact fixe 44, en l'absence de clef, ou avec un contact fixe 46 lorsqu'une clef 10 est introduite dans le commutateur rotatif de commande 12, ou lorsqu'une telle introduction est simulée et de changement de cet état.

Le contact fixe 44 est relié par une ligne 48 à un premier contact fixe 50 appartenant à un commutateur 52 qui constitue des moyens de détection de l'état de l'antivol au sens de l'invention.

Le second contact fixe 46 de l'interrupteur de clef 14 est relié par la ligne 18 au second contact fixe 54 du commutateur 52 ainsi qu'à une entrée "DEMANDE" de la centrale électronique d'antivol 20.

Le commutateur 52 comporte un contact mobile basculant 56 qui est susceptible de coopérer avec l'un ou l'autre des premier 50 et second 54 contacts fixes et qui est relié en permanence à la seconde borne A2 d'un bloc 58 d'alimentation électrique du moteur d'antivol 34 tandis que la première borne A1 du bloc d'alimentation 58 est reliée en permanence à la borne +BAT de la batterie du véhicule.

Le bloc d'alimentation électrique 58 du moteur 34 reçoit des signaux de commande de verrouillage et de déverrouillage par des lignes 60V et 60D reliés à des ports de sortie "VER", "DEV" de la centrale d'antivol 20, respectivement.

Le contact fixe 46 de l'interrupteur de clef 14 est relié au port d'entrée "DEMANDE" de la centrale d'antivol 20 de manière que cette dernière puisse déclencher une séquence d'identification de la demande de déverrouillage de l'antivol ou de la demande de verrouillage de l'antivol.

L'interrupteur de commande à positions multiples 16 est un interrupteur de type rotatif qui comporte un contact mobile de commande 62 qui est relié en permanence à la borne +BAT de la batterie du véhicule.

Le contact mobile de commande 62 est susceptible d'occuper sucuessivement plusieurs positions décalées angulairement les unes par rapport aux autres et qui sont repérées "O", "ACC", "M", et "D" sur les figures.

Dans ces positions successives d'arrêt, d'alimentation d'accessoires électriques du véhicule, de marche et de démarrage du moteur à combustion du véhicule, le contact mobile rotatif de commande 62 est susceptible de coopérer avec une ou plusieurs pistes conductrices agencées en arc de cercle qui constitue les contacts fixes de l'interrupteur 16.

Lorsque le contact mobile de commande 62 est dans la position "ACC", il coopère avec une piste fixe 64 qui est reliée électriquement au circuit d'alimentation +ACC des accessoires du véhicule.

Lorsque le contact mobile de commande 62 est dans la position "M", il est simultanément en contact avec la piste 64 et avec une piste conductrice 66 qui est reliée au circuit d'allumage +ALL du moteur du véhicule.

Lorsque le contact mobile 62 est dans la position "D", il est en contact avec la piste 66, ainsi qu'avec une piste conductrice 68.

La piste 68 est le contact fixe de démarreur DEM du moteur à combustion du véhicule (non représenté) qui est relié au circuit +DEM d'alimentation électrique du démarreur.

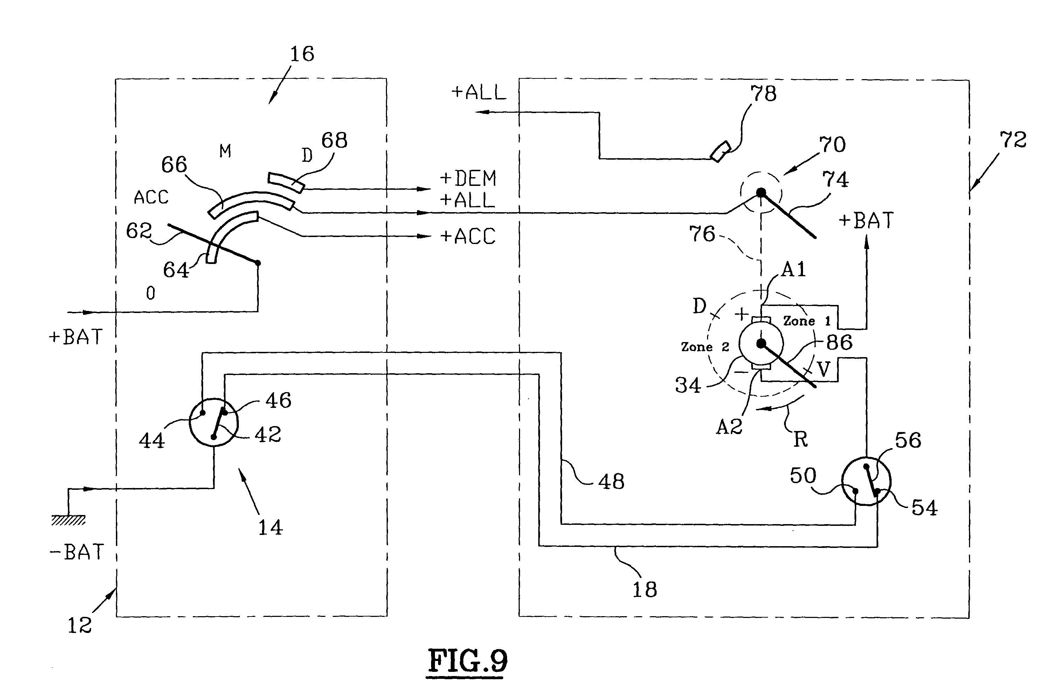

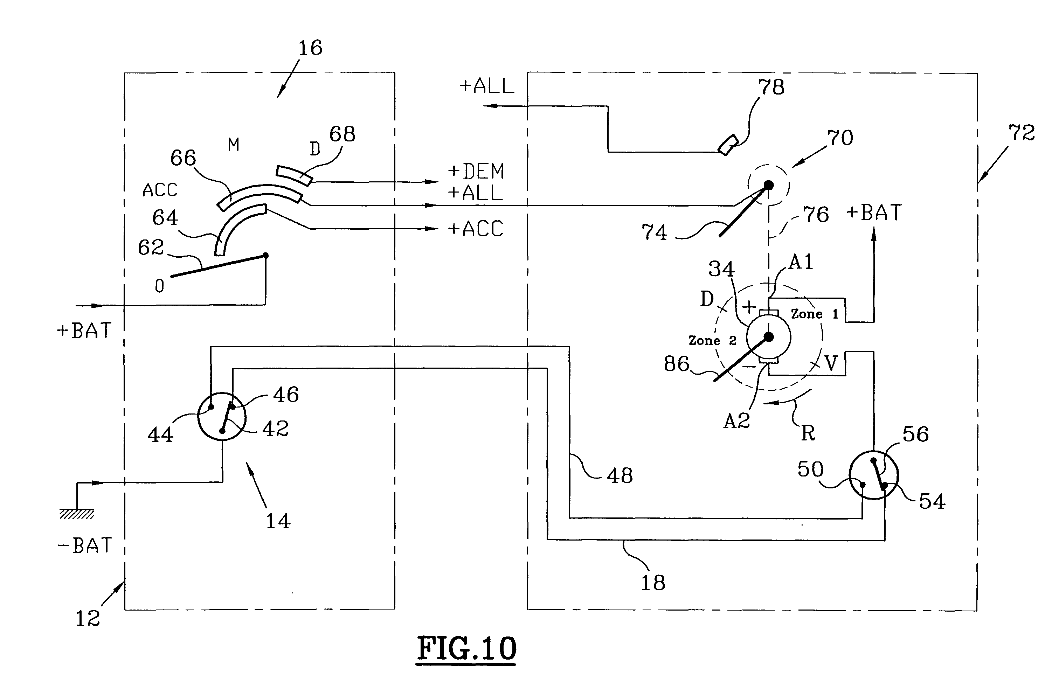

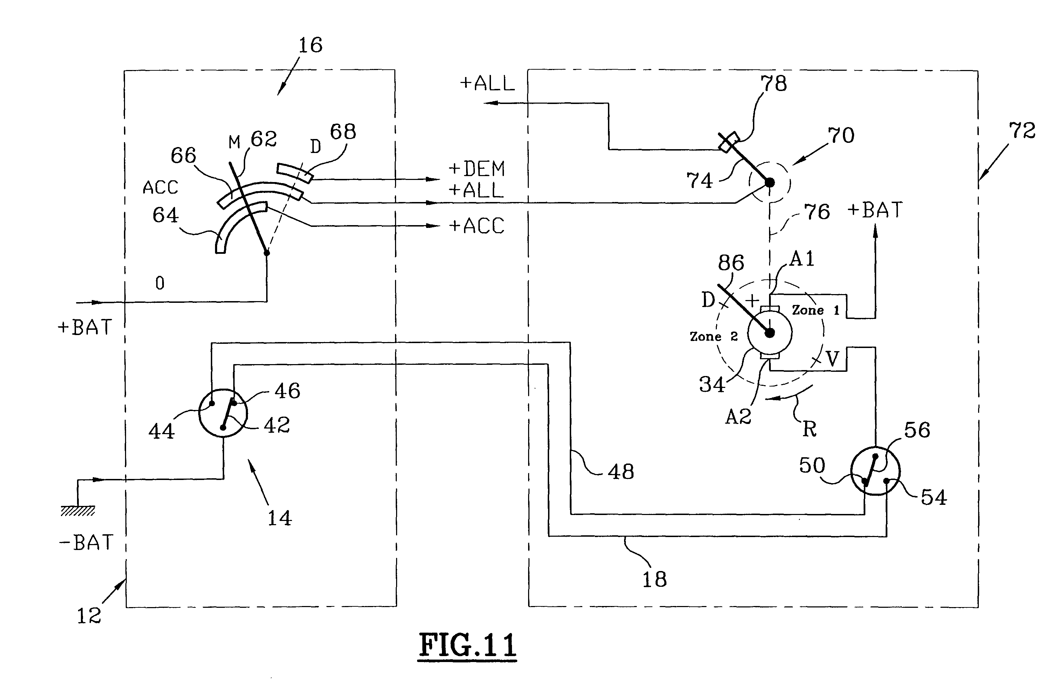

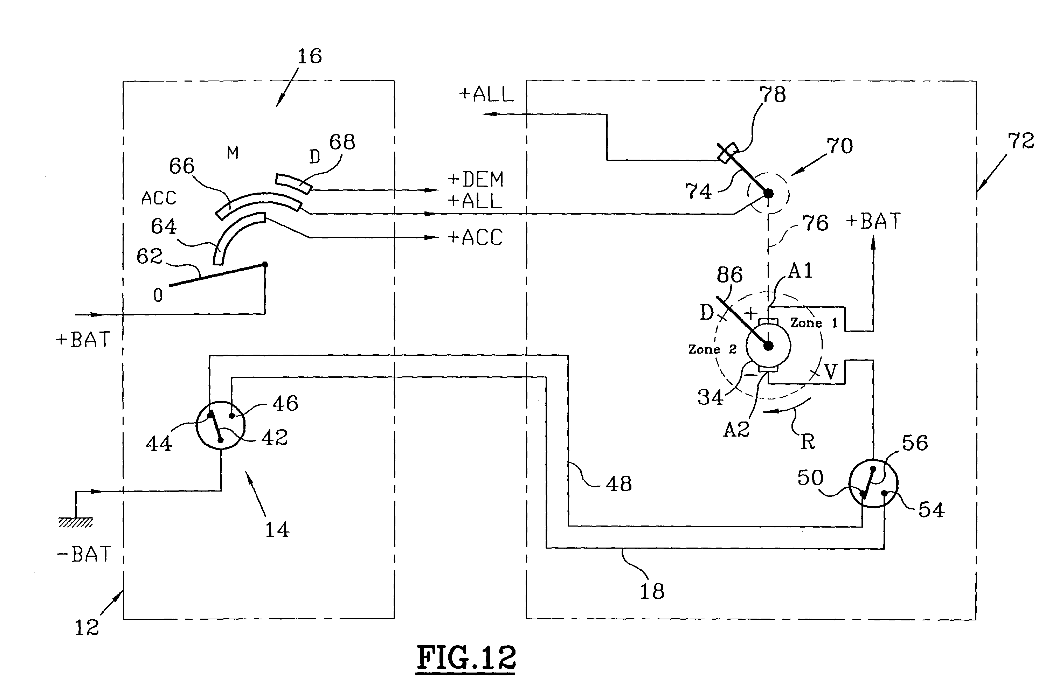

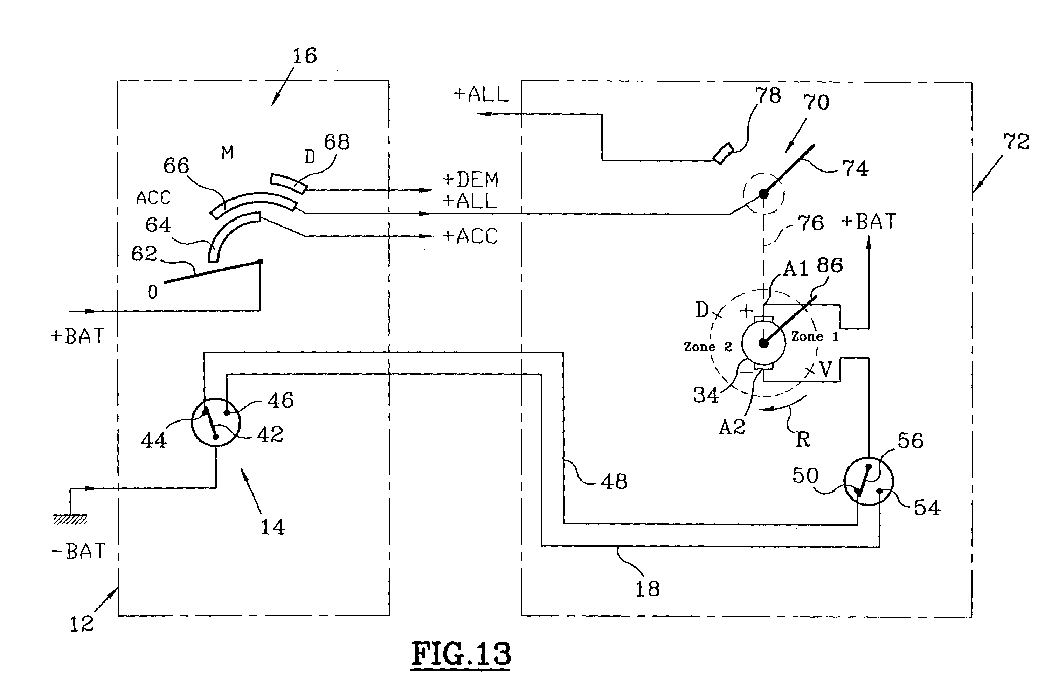

Dans l'exemple de réalisation illustré aux figures 2 à 13, la piste conductrice 66 est reliée au circuit électrique d'allumage +ALL par l'intermédiaire d'un dispositif d'inhibition 70 appartenant au module de blocage 72 entouré par une ligne en trait pointillé à la partie droite de la figure 2.

Le dispositif d'inhibition 70 est un interrupteur rotatif qui comporte un contact mobile d'inhibition 74 qui est lié en rotation à l'arbre de sortie du moteur 34, cette liaison mécanique étant schématisée par la ligne 76 sur les figures.

Le contact mobile d'inhibition 74 est relié en permanence à la piste conductrice 66 de l'interrupteur de commande à positions multiples 16 et il est susceptible de coopérer avec un plot fixe 78, relié au circuit d'allumage +ALL du moteur du véhicule, uniquement lorsque l'antivol est dans sa position déverrouillée.

Conformément aux enseignements de l'invention, le moteur 34 est un moteur électrique à sens continu de rotation qui est indiqué par la flèche R sur les figures.

On peut partager la course angulaire de l'arbre de sortie du moteur en deux zones s'étendant chacune par exemple sur 180°, une première zone 1 qui s'étend depuis la position angulaire "D" correspondant à l'état déverrouillé de l'antivol jusqu'à la position angulaire "V" correspondant à l'état verrouillé de l'antivol, et une zone 2 correspondant à la course angulaire pour le passage de l'état verrouillé à l'état déverrouillé.

Le moteur électrique 34 comporte une première borne d'alimentation B1 et une seconde borne d'alimentation B2, les ordres de commande du verrouillage ou du déverrouillage transmis au bloc d'alimentation 58 par les lignes 60V et 60D ayant pour effet par exemple d'interrompre ou d'établir l'alimentation électrique à la borne B2 en reliant à la polarité - BAT de la source d'alimentation constituée par la batterie du véhicule, la borne B1 étant par exemple en permanence reliée à la polarité +BAT.

La centrale électronique d'antivol 20 comporte un port d'entrée V/D qui est relié par une ligne 80 au contact mobile 56 du commutateur de détection de l'état de l'antivol ainsi qu'à la seconde borne A2 du bloc 58 d'alimentation électrique du moteur 34.

Enfin, la centrale d'antivol 20 comporte une ligne 82 de liaison codée avec les autres composants assurant la fonction d'antivol électrique commandé à distance et une ligne 84 de liaison avec des moyens de diagnostic.

On décrira maintenant le fonctionnement de l'antivol électrique illustré aux figures 2 à 7 en partant de la situation illustrée sur la figure 2 dans laquelle l'antivol est en position verrouillée et dans laquelle aucune clef n'est introduite dans l'interrupteur de clef 14.

Dans cette position, la seconde borne A2 du bloc d'alimentation électrique 58 n'est pas reliée à la borne -BAT de la batterie, et quels que soient les ordres éventuels transmis au bloc d'alimentation 58 par la centrale électronique d'antivol 20, il est impossible de provoquer une mise en route du moteur 34, et donc un changement d'état de l'antivol.

On constate que même une rotation intempestive du contact mobile de commande 62 de l'interrupteur à contacts multiples 16, en l'absence d'un changement d'état de l'interrupteur de clef 14, ne provoquerait pas la mise en marche du moteur du véhicule car l'alimentation électrique du circuit d'allumage +ALL est interrompue par le dispositif d'inhibition 70.

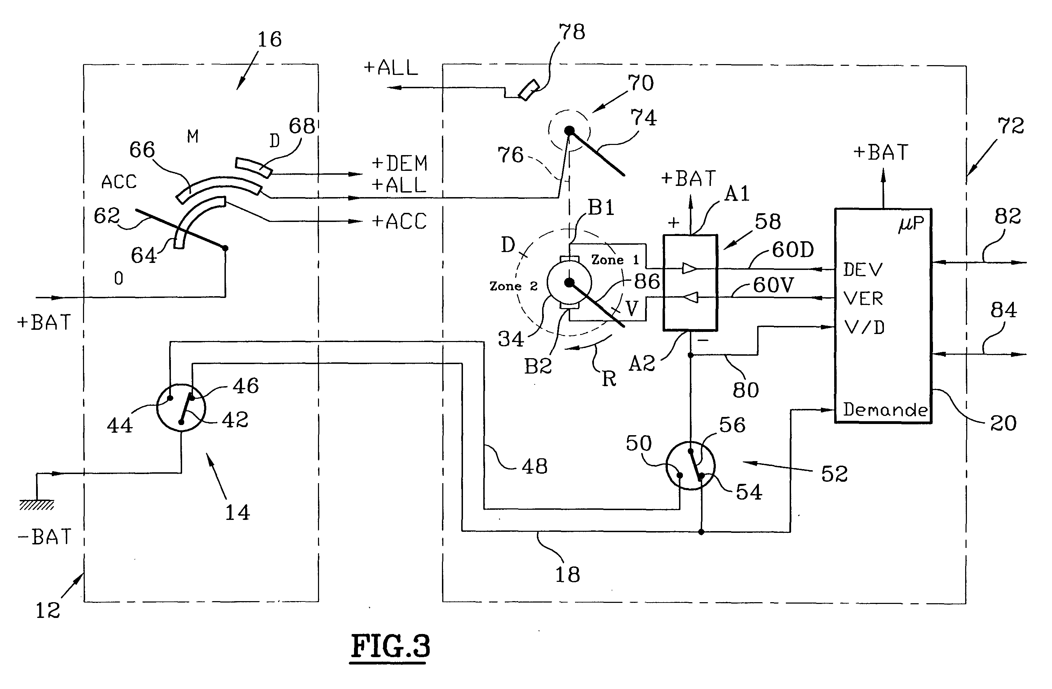

Lorsque le conducteur désire procéder au déverrouillage de l'antivol et au démarrage du véhicule, il commence par introduire une clef, ou par simuler une telle introduction, ce qui conduit à la position illustrée sur la figure 3.

Dans cette position, l'interrupteur de présence de clef 14 a changé de position et son contact mobile 42 relie désormais la borne -BAT de la batterie à la seconde borne A2 du bloc 58 d'alimentation électrique du moteur 34 à travers le commutateur rotatif 52.

Le bloc d'alimentation électrique 58 est ainsi en mesure d'alimenter le moteur 34 s'il reçoit des ordres correspondants provenant de la centrale d'antivol 20.

A cet effet, la centrale d'antivol 20 a reçu simultanément, du fait du changement d'état de l'interrupteur de clef 14, un signal de demande de changement d'état de l'antivol à son port d'entrée "DEMANDE".

La centrale d'antivol 20 analyse ce signal et transmet alors par une ligne 60D un ordre de commande du déverrouillage au bloc d'alimentation 58 qui provoque l'alimentation électrique du moteur 34 et la rotation de ce dernier de la position de verrouillage "V" vers la position de déverrouillage "D".

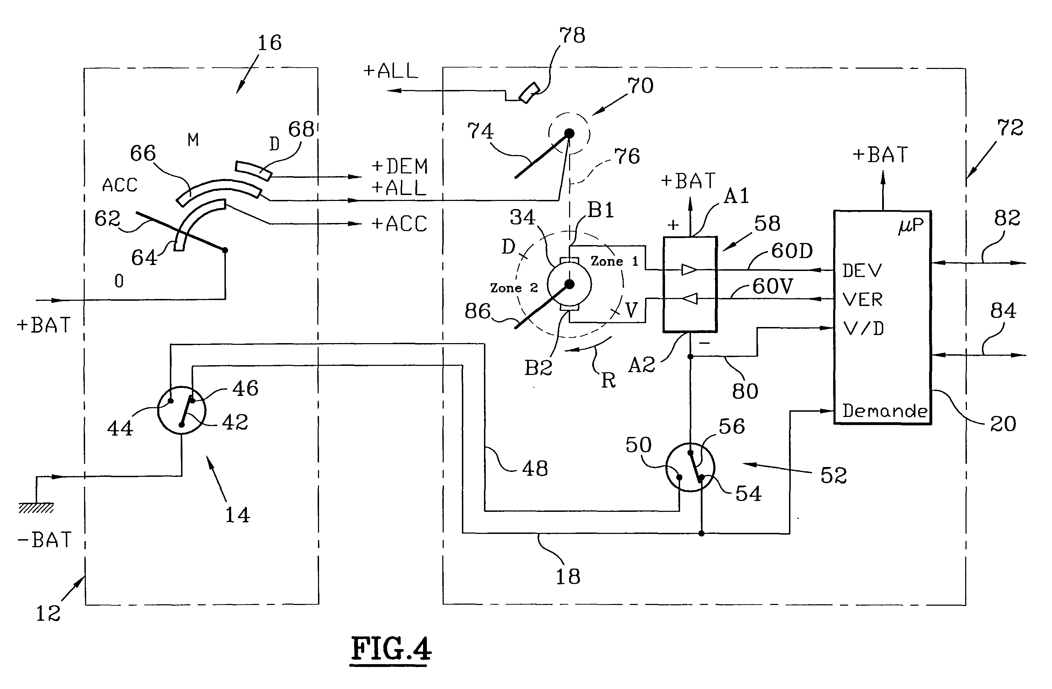

Comme on l'a représenté sur la figure 4, dans une phase de transition correspondant à une position intermédiaire de l'arbre de sortie du moteur 34, symbolisé par un organe rotatif mobile 86, le dispositif d'inhibition 70 interrompt toujours l'alimentation électrique du circuit d'allumage +ALL et le commutateur 52 de détection du changement d'état de l'antivol n'a toujours pas changé d'état.

En effet la conception du commutateur est telle que le contact mobile 56 du commutateur rotatif 52 reste en contact avec le premier contact fixe 50 lorsque l'antivol est en position verrouillée et tant que l'antivol n'a pas atteint sa position déverrouillée, c'est-à-dire tant que l'arbre du moteur est dans la zone 2.

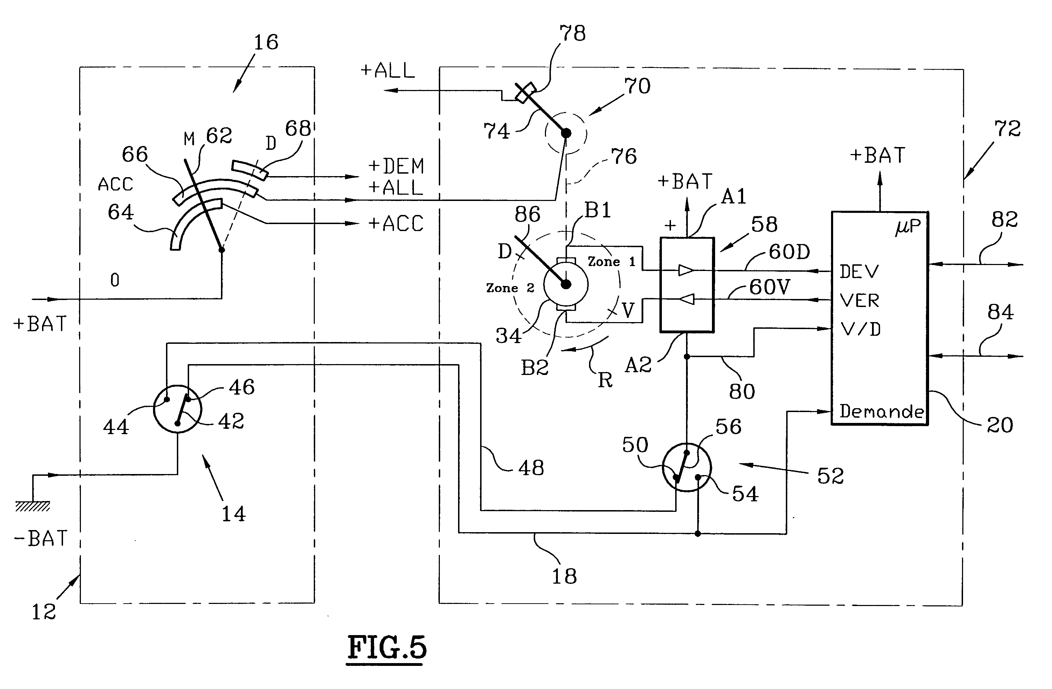

On a représenté sur la figure 5 l'ensemble des composants lorsque l'antivol est dans la position déverrouillée.

Dans cette position, le commutateur rotatif 52 a changé de position et son contact mobile 56 est désormais en contact avec le premier contact fixe 50 interrompant ainsi le raccordement de la seconde borne A2 du bloc électrique d'alimentation 58 avec la borne -BAT de la batterie du véhicule.

Après avoir parcouru la zone 2, l'arbre de sortie du moteur 34 a atteint sa position de déverrouillage D et, outre le changement d'état du commutateur rotatif 52, on constate que le dispositif d'inhibition 70 occupe alors simultanément la position dans laquelle il établit l'alimentation électrique du circuit d'allumage +ALL du moteur du véhicule, car son contact mobile d'inhibition 74 coopère avec le plot fixe 78.

Dans cette position, la seconde borne A2 du bloc 58 d'alimentation électrique du moteur 34 n'est plus reliée à la borne -BAT de la batterie.

Par contre, l'utilisateur du véhicule peut provoquer le démarrage du véhicule en agissant sur l'interrupteur rotatif à positions multiples 16 et en amenant le contact mobile de commande 62 dans la position D dans laquelle il peut provoquer le démarrage du moteur du véhicule, puis en ramenant le contact mobile de commande 62 dans la position de marche "M".

On constate qu'il est impossible que la centrale d'antivol 20 transmette un ordre intempestif de verrouillage de l'antivol tant qu'une clef est présente dans le commutateur d'antivol 12.

Lorsque, après avoir arrêté le véhicule et son moteur en ramenant le contact mobile de commande 62 dans sa position "O", le conducteur désire procéder au verrouillage de l'antivol, il commence par retirer la clef.

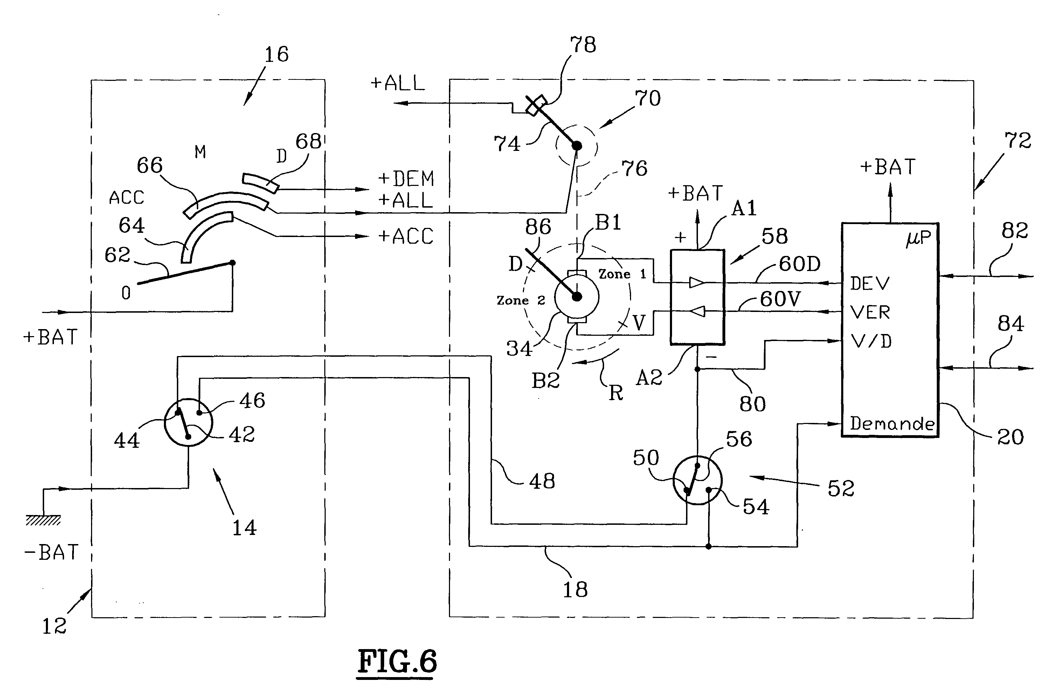

Dans cette nouvelle position illustrée sur la figure 6, l'interrupteur de clef 14 a changé de position, reliant à nouveau la seconde borne A2 du bloc 58 d'alimentation électrique du moteur 34 à la borne -BAT de la batterie du véhicule.

Le changement d'état de l'interrupteur de clef 14 est également détecté au niveau du port d'entrée "DEMANDE" de la centrale électronique d'antivol 20 qui analyse le changement d'état de ce port d'entrée comme une demande de déverrouillage, et non plus de verrouillage, car le changement d'état précédent du commutateur rotatif 52 avait été enregistré par la centrale électronique d'antivol 20 au niveau de son port d'entrée "V/D".

Après avoir analysé cette nouvelle demande de changement d'état, la centrale d'antivol 20 transmet, par la ligne 60V, un ordre de commande du verrouillage de l'antivol au bloc d'alimentation 58 dont la seconde borne A2 est reliée à la borne -BAT de la batterie du véhicule rendant ainsi possible le début de rotation du moteur 34, toujours dans le sens horaire en considérant les figures, mais à partir de la position de déverrouillage "D" en direction de la position de verrouillage "V".

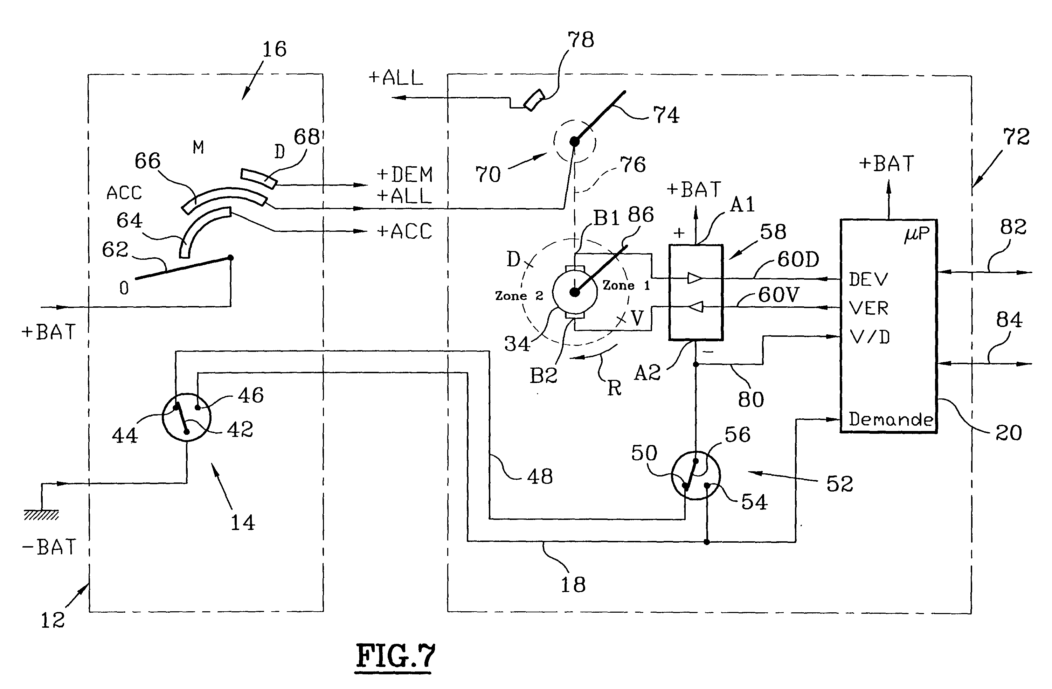

Dès que cette rotation a commencé, et comme cela est illustré sur la figure 7, le dispositif d'inhibition 70 s'ouvre à nouveau, c'est-à-dire que l'élément de contact mobile 74 a quitté le plot fixe 78 rendant ainsi impossible toute opération de démarrage à nouveau du moteur du véhicule.

Le commutateur rotatif 52 de détection du changement d'état de l'antivol reste dans la même position que celle illustrée sur la figure 6 et il ne changera à nouveau d'état que lorsque l'arbre de sortie du moteur atteindra à nouveau la position verrouillée "V" illustrée sur la figure 2, interrompant ainsi à nouveau le raccordement de la seconde borne A2 du bloc 58 d'alimentation électrique du moteur 34 et interrompant la rotation du moteur 34 dans la position verrouillée de l'antivol.

Le changement de position du commutateur rotatif 52 est à nouveau enregistré au niveau du port d'entrée V/D de la centrale d'antivol électronique 20 et le prochain changement d'état détectée au port d'entrée "DEMANDE" sera alors analysé comme une demande de déverrouillage de l'antivol.

Dans une variante de réalisation qui n'est pas représentée sur les figures, il est possible d'interposer le dispositif d'inhibition 70 entre la borne +BAT de la batterie et le contact mobile de commande 62, les pistes conductrices 64, 66 et 68 étant alors chacune reliée directement au circuit électrique correspondant du véhicule.

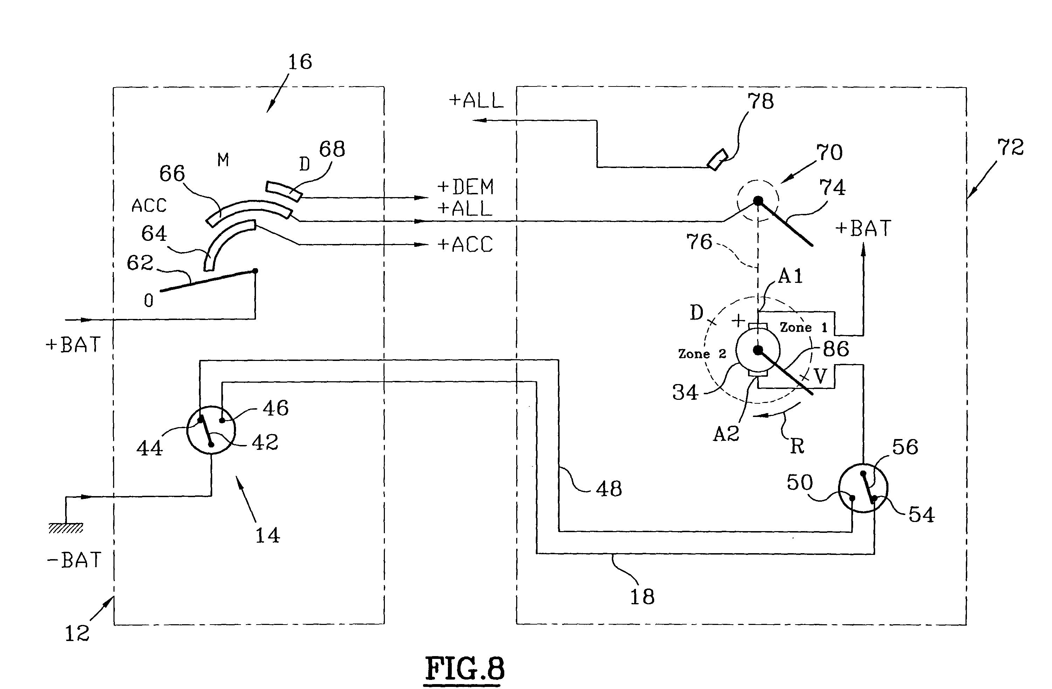

On décrira maintenant le second mode de réalisation d'un antivol électrique conforme aux enseignements de l'invention qui est illustré aux figures 8 à 13.

Sur ces figures, des composants identiques ou similaires à ceux décrits et représentés en référence aux figures 2 à 7 sont désignés par les mêmes chiffres de référence.

Dans ce second mode de réalisation, l'antivol électrique ne fait pas appel à une centrale électronique d'antivol 20 et la logique de commande des changements d'état de l'antivol motorisé est assurée sous la forme d'une logique câblée et protégée.

On a ainsi désigné par A1 la première borne d'alimentation du moteur 34 et par A2 sa seconde borne d'alimentation.

La première borne d'alimentation A1 est reliée en permanence à la borne + BAT de la batterie du véhicule tandis que sa seconde borne d'alimentation A2 est reliée à la borne - BAT par l'interrupteur de clef 14 et par le commutateur rotatif 52 de détection du changement d'état de l'antivol dont les conceptions sont identiques à celles qui ont été décrites en référence aux figures 2 à 7.

Le mode de fonctionnement de l'antivol électrique illustré aux figures 8 à 13 est globalement identique à celui du premier mode de réalisation décrit et représenté aux figures 2 à 7, l'interrupteur de clef 14 et le commutateur rotatif 52 de détection d'un changement d'état de l'antivol assurant les mêmes fonctions pour le raccordement ou non de la seconde borne d'alimentation A2 à la borne -BAT de la batterie du véhicule.

## Revendications

1. Antivol électrique perfectionné, notamment pour un véhicule automobile, du type comportant :
- un commutateur d'antivol (12) pour la commande du démarrage (+DEM) du moteur du véhicule et de l'alimentation de différents circuits électriques du véhicule (+ACC, +ALL) ;
- un antivol motorisé comportant un moteur électrique (34) d'entraînement d'un organe de blocage (36) entre une position verrouillée (V) et une position déverrouillée (D), du type dans lequel le commutateur d'antivol (12) comporte :
- un interrupteur de clef (14) pour détecter la simulation de l'introduction d'une clef (10) dans le commutateur d'antivol (12) ; et
- un interrupteur de commande (16) à positions multiples pour commander en séquence l'alimentation de plusieurs circuits électriques du véhicule (+ACC, +ALL) et du démarreur (+DEM) comportant un contact mobile de commande (62) relié à une polarité (+BAT) d'une source d'alimentation électrique, et une série de contacts fixes (64, 66, 68) avec lesquels le contact mobile de commande (62) entre successivement en contact lors de la manoeuvre du commutateur (12) en vue de provoquer le démarrage du moteur du véhicule ;
caractérisé en ce que le moteur électrique (34) de l'antivol motorisé comporte une première borne d'alimentation (A1) qui est reliée à une première polarité (+ BAT) de la source d'alimentation, et une seconde borne d'alimentation (A2) qui n'est reliée à la seconde polarité (-BAT) de la source d'alimentation, à travers des moyens (52) de détection de l'état de l'antivol et à travers l'interrupteur de clef (14)
- qu'en l'absence de clef et lorsque l'antivol n'est pas en position verrouillée,
- ou qu'en présence de clef et lorsque l'antivol n'est pas en position déverrouillée.

2. Antivol électrique selon la revendication 1, caractérisé en ce que l'interrupteur de clef (14) comporte un contact mobile (42) relié à la seconde polarité (-BAT)de la source d'alimentation et qui est susceptible de coopérer avec un premier contact fixe (44, 50) des moyens (52) de détection de l'état de l'antivol, en l'absence de clef, et avec un second contact fixe (46, 54) des moyens de détection de l'état de l'antivol, en présence de clef, et en ce que les moyens (52) de détection de l'état de l'antivol comportent un contact mobile (56) qui est relié en permanence à la seconde borne d'alimentation (A2) du moteur (34) et qui n'est susceptible de coopérer avec le premier contact fixe (50) que lorsque l'antivol est en position déverrouillée ou lorsque l'organe de blocage est dans une phase de transition de l'état déverrouillé vers l'état verrouillé, ou qu'avec le second contact fixe (54) lorsque l'antivol est en position verrouillée ou lorsque l'organe de blocage est dans sa phase de transition de l'état verrouillé vers l'état déverrouillé.

3. Antivol électrique selon l'une des revendications 1 ou 2, caractérisé en ce qu'il comporte une centrale d'antivol (20) connectée au commutateur d'antivol (12) et à l'antivol motorisé, caractérisé en ce que le moteur d'entraînement (34) est relié électriquement à la source d'alimentation par un bloc d'alimentation (58) qui reçoit des signaux de commande de verrouillage ou de déverrouillage de l'antivol provenant de la centrale d'antivol (20), en ce que ladite première borne d'alimentation du moteur est une première borne (A1) d'alimentation du bloc d'alimentation (58), et en ce que ladite seconde borne d'alimentation du moteur est une seconde borne d'alimentation (A2) du bloc d'alimentation (58).

4. Antivol électrique selon la revendication 3, caractérisé en ce que la seconde borne d'alimentation (A2) est reliée en permanence à une entrée (V/D), de la centrale d'antivol (20), de détection d'un changement d'état de la seconde borne d'alimentation (A2).

5. Antivol électrique selon l'une des revendications 3 ou 4, caractérisé en ce qu'une entrée (DEMANDE), de la centrale d'antivol (20) reçoit un signal de détection d'un changement d'état de l'interrupteur de clef (14).

6. Antivol électrique selon la revendication 5 prise en combinaison avec la revendication 2, caractérisé en ce que ladite entrée (DEMANDE) de détection d'un changement d'état de l'interrupteur de clef (14) est reliée en permanence à l'un (54) des deux contacts fixes (50, 54) des moyens (52) de détection de l'état de l'antivol.

7. Antivol électrique selon l'une quelconque des revendications précédentes, caractérisé en ce que l'un au moins (66) des contacts fixes de l'interrupteur de commande à positions multiples (16) du commutateur d'antivol (12) est relié au circuit électrique associé (+ALL) du véhicule par un dispositif d'inhibition (70) qui n'établit l'alimentation électrique de ce circuit que lorsque l'antivol est en position déverrouillée.

8. Antivol électrique selon la revendication 7, caractérisé en ce que le dispositif d'inhibition est un interrupteur d'inhibition (70) dont le contact mobile (74) est relié audit contact fixe (66) de l'interrupteur de commande (16) et coopère avec un plot fixe (78) relié audit circuit électrique (+ALL) lorsque l'antivol est en position déverrouillée.

9. Antivol électrique selon la revendication 8, caractérisé en ce que le contact mobile (74) de l'interrupteur d'inhibition (70)est lié en rotation au moteur de l'antivol motorisé.

10. Antivol électrique selon l'une quelconque des revendications précédentes, caractérisé en ce que le commutateur d'antivol (12) est un commutateur rotatif.

## Patentansprüche

1. Verbesserte elektrische Diebstahlsicherung, insbesondere für ein Kraftfahrzeug, mit
- einem Diebstahlschutzschalter (12) zur Steuerung des Startvorganges (+DEM) des Fahrzeugmotors und zur Versorgung der unterschiedlichen elektrischen Stromkreise des Fahrzeuges (+ACC, +ALL),
- einer motorbetätigten Diebstahlsicherung mit einem Elektromotor (34) für den Antrieb eines Sperrelementes (36) zwischen einer verriegelten Stellung (V) und einer entriegelten Stellung (D), wobei der Diebstahlschutzschalter (12):
- einen Schlüsselschalter (14) zum Erkennen der Simulation des Einführens eines Schlüssels (10) in den Diebstahlschutzschalter (12); und
- einen Mehrstellungssteuerschalter (16) für die sequentielle Steuerung der Versorgung mehrerer elektrischer Stromkreise des Fahrzeuges (+ACC, +ALL) und des Starters (+DEM) umfaßt, wobei der Mehrstellungssteuerschalter einen beweglichen Steuerkontakt (62), der mit einer Polarität (+BAT) einer Stromquelle verbunden ist, und eine Reihe von feststehenden Kontakten (64, 66, 68) enthält, mit denen der bewegliche Kontakt (62) bei einer Betätigung des Schalters (12) nacheinander in Berührung kommt, um das Fahrzeug zu starten,
- dadurch gekennzeichnet, daß der Elektromotor (34) der motorbetätigten Diebstahlsicherung eine erste Anschlußklemme (A1) umfaßt, die mit einer ersten Polarität (+BAT) der Stromquelle verbunden ist, und eine zweite Anschlußklemme (A2) aufweist, die nur mit der zweiten Polarität (-BAT) der Stromquelle über Mittel (52) zur Bestimmung des Zustandes der Diebstahlsicherung und über den Schlüsselschalter (14) verbunden ist
- wenn kein Schlüssel vorhanden ist und wenn die Diebstahlsicherung sich nicht in der verriegelten Stellung befindet,
- oder wenn ein Schlüssel vorhanden ist und wenn sich die Diebstahlsicherung nicht in der entriegelten Stellung befindet.

2. Elektrische Diebstahlsicherung nach Anspruch 1, dadurch gekennzeichnet, daß der Schlüsselschalter (14) einen beweglichen Kontakt (42) umfaßt, der mit der zweiten Polarität (-BAT) der Stromquelle verbunden ist, und welcher, bei Abwesenheit des Schlüssels, mit einem ersten feststehenden Kontakt (44, 50) der Mittel (52) zur Bestimmung des Zustandes der Diebstahlsicherung in Wirkverbindung steht, und, bei Anwesenheit des Schlüssels, mit einem zweiten feststehenden Kontakt (46, 54) der Mittel zur Bestimmung des Zustandes der Diebstahlsicherung in Wirkverbindung steht, und daß die Mittel (52) zur Bestimmung des Zustandes der Diebstahlsicherung einen beweglichen Kontakt (56) umfassen, der ständig mit einer zweiten Anschlußklemme (A2) des Motors (34) verbunden ist, und der nur dann mit dem ersten feststehenden Kontakt (50) zusammenwirkt, wenn sich die Diebstahlsicherung in der entriegelten Stellung befindet oder wenn sich das Sperrelement in einer Übergangsphase zwischen dem entriegelten und dem verriegelten Zustand befindet, oder nur mit einem zweiten feststehenden Kontakt (54) zusammenwirkt, wenn die Diebstahlsicherung sich in ihrer verriegelten Stellung befindet oder wenn sich das Sperrelement in seiner Übergangsphase zwischen dem verriegelten und dem entriegelten Zustand befindet.

3. Elektrische Diebstahlsicherung nach einem der Ansprüche 1 oder 2, dadurch gekennzeichnet, daß die Diebstahlsicherung eine Diebstahlschutzsteuerung (20) umfaßt, die mit dem Diebstahlschutzschalter (12) und mit der motorbetätigten Diebstahlsicherung verbunden ist, dadurch gekennzeichnet, daß der Antriebsmotor (34) elektrisch mit der Stromquelle über eine Stromversorgungseinheit (58) verbunden ist, die Steuersignale zur Verriegelung und Entriegelung der Diebstahlsicherung von der Diebstahlschutzsteuerung (20) empfängt, daß es sich bei der ersten Anschlußklemme des Motors um eine erste Anschlußklemme (A1) der Stromversorgungseinheit (58) und bei der zweiten Anschlußklemme des Motors um eine zweite Anschlußklemme (A2) der Stromversorgungseinheit (58) handelt.

4. Elektrische Diebstahlsicherung nach Anspruch 3, dadurch gekennzeichnet, daß die zweite Anschlußklemme (A2) ständig mit einem Eingang (V/D) der Diebstahlschutzsteuerung (20) verbunden ist, um Zustandsänderungen an der zweiten Anschlußklemme (A2) zu ermitteln.

5. Elektrische Diebstahlsicherung nach einem der Ansprüche 3 oder 4, dadurch gekennzeichnet, daß ein Eingang (ABFRAGE) der Diebstahlschutzsteuerung (20) vorgesehen ist, der ein Signal zur Bestimmung der Zustandsänderung des Schlüsselschalters (14) empfängt.

6. Elektrische Diebstahlsicherung nach Anspruch 5 in Kombination mit Anspruch 2, dadurch gekennzeichnet, daß der Eingang (ABFRAGE) zur Bestimmung der Zustandsänderung des Schlüsselschalters (14) ständig mit einem der beiden feststehenden Kontakte (50, 54) der Mittel (52) zur Bestimmung des Zustandes der Diebstahlsicherung verbunden ist.

7. Elektrische Diebstahlsicherung nach einem der vorhergehenden Ansprüche, dadurch gekennzeichnet, daß wenigstens einer der feststehenden Kontakte (66) des Mehrstellungssteuerschalters (16) des Diebstahlschutzschalters (12) mit einem Stromkreis (+ALL) des Fahrzeuges über eine Sperrvorrichtung (70) verbunden ist, die diesen Stromkreis nur dann mit elektrischem Strom versorgt, wenn die Diebstahleinrichtung sich in der entriegelten Stellung befindet.

8. Elektrische Diebstahlsicherung nach Anspruch 7, dadurch gekennzeichnet, daß es sich bei der Sperrvorrichtung um einen Sperrschalter (70) handelt, dessen beweglicher Kontakt (74) mit dem feststehenden Kontakt (66) des Steuerschalters (16) verbunden ist und der mit einem Kontaktstück (78), welches mit dem besagten elektrischen Stromkreis (+ALL) verbunden ist, zusammenwirkt, wenn die Diebstahlsicherung sich in der entriegelten Stellung befindet.

9. Elektrische Diebstahlsicherung nach Anspruch 8, dadurch gekennzeichnet, daß der bewegliche Kontakt (74) des Sperrschalters (70) drehfest mit dem Motor der motorbetätigten Diebstahlsicherung verbunden ist.

10. Elektrische Diebstahlsicherung nach einem der vorhergehenden Ansprüche, dadurch gekennzeichnet, daß es sich bei dem Diebstahlschutzschalter (12) um einen Drehschalter handelt.

## Claims

1. An improved anti-theft device, especially for a motor vehicle, of the type comprising:
- an anti-theft switch for controlling starting (+DEM) of the engine of the vehicle and for supplying power to various electrical circuits of the vehicle (+ACC, +ALL) ;
- a motorised anti-theft unit, including an electric motor (34) for driving a stop member (36) between a locked position (V) and an unlocked position (D), of the type in which the anti-theft switch (12) comprises:
- a key interruptor (14) for detecting simulated introduction of a key (10) into the anti-theft switch (12); and
- a multi-position control interruptor (16) for controlling the supply of power sequentially to a plurality of electrical circuits of the vehicle (+ACC, +ALL) and to the starter (+DEM), and including a moving control contact (62) connected to one polarity (+BAT) of an electrical power source, and a set of fixed contacts (64, 66, 68) with which the moving control contact enters into contact successively during operation of the switch (12), whereby to cause the engine of the vehicle to start;
characterised in that the electric motor (34) of the motorised anti-theft unit has a first power terminal (A1) which is connected to a first polarity (+BAT) of the power source, and a second power terminal (A2) which is connected to the second polarity (-BAT) of the power source, via means (52) for detecting the state of the anti-theft unit and via the key interruptor (14), only:
- either in the absence of a key when the anti-theft unit is not in its locked position,
- or in the presence of a key when the anti-theft unit is not in its unlocked position.

2. An electrical anti-theft device according to Claim 1, characterised in that the key interruptor (14) has a moving contact (42) connected to a second polarity (-BAT) of the power source and arranged to cooperate with a first fixed contact (44, 50) of the means (52) for detecting the state of the anti-theft unit, in the absence of a key, and with a second fixed contact (46, 54) of the means for detecting the state of the anti-theft unit, in the presence of a key, and in that the means for detecting the state of the anti-theft unit include a moving contact (56) which is permanently connected to the second power terminal (A2) of the motor (34) and which is arranged to cooperate only with the first fixed contact (50) when the anti-theft unit is in its unlocked position or when the stop member is in a phase of transition from the unlocked state towards the locked state, or only with the second fixed contact (54) when the anti-theft unit is in its locked position or when the stop member is in its phase of transition from the locked state towards the unlocked state.

3. An electrical anti-theft device according to Claim 1 or Claim 2, characterised in that it includes a central control circuit (20) connected to the anti-theft switch (12) and to the anti-theft unit,
characterised in that the drive motor (34) is electrically connected to the power source via a power circuit (5) which receives control signals for locking or unlocking the anti-theft unit derived from the central control circuit (20), in that the said first power terminal of the motor is a first power terminal (A1) of the power circuit (58), and in that the said second power terminal of the motor is a second power terminal (A2) of the power circuit (58).

4. An electrical anti-theft device according to Claim 3, characterised in that the second power terminal (A2) is permanently connected to an input (V/D) of the central control circuit (20), for detecting a change of state in the second power terminal (A2).

5. An electrical anti-theft device according to Claim 3 or Claim 4, characterised in that an input (DEMAND) of the central control circuit (20) receives a signal as to the detection of a change of state of the key interruptor (14).

6. An electrical anti-theft device according to Claim 5 taken in combination with Claim 2, characterised in that the said input (DEMAND) for detection of the change of state of the key interruptor (14) is permanently connected to one (54) of the two fixed contacts (50, 54) of the means (52) for detecting the state of the anti-theft unit.

7. An electrical anti-theft device according to any one of the preceding Claims, characterised in that at least one of the fixed contacts of the multi-position control interruptor (16) of the anti-theft switch (12) is connected to the appropriate electrical circuit (+ALL) of the vehicle via an inhibiting device (70) which establishes the supply of power to the said circuit only when the anti-theft unit is in its unlocked position.

8. An electrical anti-theft device according to Claim 7, characterised in that the inhibiting device is an inhibiting interruptor (70) having a moving contact (74) which is connected to the said fixed contact (66) of the control interruptor (16), and which co-operates with a fixed contact pad (7), connected to the said electrical circuit (+ALL) when the anti-theft unit is in its unlocked position.

9. An electrical anti-theft device according to Claim 8, characterised in that the moving contact (74) of the inhibiting interruptor (70) is coupled in rotation to the motor of the motorised anti-theft unit.

10. An electrical anti-theft device according to any one of the preceding Claims, characterised in that the anti-theft switch (12) is a rotary switch.
